(19) Europäisches Patentamt
European Patent Office
Office européen des brevets

(11) **EP 4 417 658 B1**

(12) **EUROPEAN PATENT SPECIFICATION**

(45) Date of publication and mention
of the grant of the patent:
**05.11.2025 Bulletin 2025/45**

(21) Application number: **24155957.4**

(22) Date of filing: **06.02.2024**

(51) International Patent Classification (IPC):
***C09D 11/322*** *(2014.01)*    ***C09D 11/12*** *(2006.01)*
***C09D 11/38*** *(2014.01)*

(52) Cooperative Patent Classification (CPC):
**C09D 11/322; C09D 11/12; C09D 11/38**

(54) **AQUEOUS INK, INK CARTRIDGE AND INK JET RECORDING METHOD**

WÄSSRIGE TINTE, TINTENPATRONE UND TINTENSTRAHLAUFZEICHNUNGSVERFAHREN

ENCRE AQUEUSE, CARTOUCHE D'ENCRE ET PROCÉDÉ D'ENREGISTREMENT PAR JET D'ENCRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.02.2023 JP 2023019970**
        **18.01.2024 JP 2024006325**

(43) Date of publication of application:
**21.08.2024 Bulletin 2024/34**

(73) Proprietor: **CANON KABUSHIKI KAISHA**
**Tokyo 146-8501 (JP)**

(72) Inventors:
• **SASAKI, Daichi**
**Tokyo (JP)**
• **KOBAYASHI, Satoru**
**Tokyo (JP)**
• **KAKIKAWA, Hiroshi**
**Tokyo (JP)**

(74) Representative: **WESER & Kollegen**
**Patentanwälte PartmbB**
**Radeckestraße 43**
**81245 München (DE)**

(56) References cited:
**WO-A1-2016/092310**     **WO-A2-2013/150289**
**WO-A2-2016/071125**     **JP-A- 2020 019 875**

EP 4 417 658 B1

**Description**

BACKGROUND OF THE INVENTION

Field of the Invention

The present invention relates to an aqueous ink, an ink cartridge and an ink jet recording method.

Description of the Related Art

In recent years, further enhancement in the light fastness of an image recorded by an ink jet recording method has been demanded. As an example of an ink that may record an image with satisfactory light fastness, a pigment ink containing a pigment as a coloring material has been used. However, an image recorded with a pigment ink is typically lower in color developability as compared to an image recorded with a dye ink containing a dye as a coloring material. Thus, in general, achievement of both the light fastness and color developability of an image is difficult. In particular, achievement of both the light fastness and color developability of an image recorded with an ink containing a yellow pigment is especially difficult.

An ink that achieves both the color developability and light fastness of an image through combined use of, for example, C.I. Pigment Yellow 74 and C.I. Pigment Yellow 128 has been proposed (Japanese Patent Application Laid-Open No. 2012-072359). Further, an ink that achieves both the color developability and light fastness of an image through combined use of C.I. Pigment Yellow 74 and C.I. Pigment Yellow 155 has been proposed (Japanese Patent Application Laid-Open No. 2020-019875).

SUMMARY OF THE INVENTION

However, when the ink proposed in Japanese Patent Application Laid-Open No. 2012-072359 is used, it is difficult to record an image that achieves both the light fastness and color developability at a level that has been demanded in recent years. Meanwhile, when the ink proposed in Japanese Patent Application Laid-Open No. 2020-019875 is used, it is possible to record an image that achieves both the light fastness and color developability. However, a pigment may be liable to stick around an ejection orifice of a recording head, causing the ejection property of the ink to be unstable.

When sticking occurs around an ejection orifice of a recording head of an ink jet system, it is difficult to stably eject an ink. Thus, recovery processing for eliminating the sticking that has occurred around the ejection orifice is performed. However, the sticking that occurs in the case of using the ink proposed in Japanese Patent Application Laid-Open No. 2020-019875 is less likely to be eliminated by normal recovery processing, and it has been difficult to restore a state of ejecting the ink to a normal state.

Accordingly, an object of the present invention is to provide an aqueous ink for ink jet that is capable of recording an image excellent in color developability and light fastness and is excellent in sticking recovery property. Another object of the present invention is to provide an ink cartridge and an ink jet recording method each using the aqueous ink.

That is, according to the present invention, there is provided an aqueous ink for ink jet comprising a plurality of kinds of pigments and a wax particle. The plurality of kinds of pigments comprise a first pigment and a second pigment. The first pigment is C.I. Pigment Yellow 74, and the second pigment is C.I. Pigment Yellow 155.

Further features of the present invention will become apparent from the following description of exemplary embodiments with reference to the attached drawings.

BRIEF DESCRIPTION OF THE DRAWINGS

FIG. 1 is a sectional view for schematically illustrating an ink cartridge according to one embodiment of the present invention.
FIG. 2A and FIG. 2B are views for schematically illustrating an example of an ink jet recording apparatus to be used in an ink jet recording method of the present invention, in which FIG. 2A is a perspective view of the main portion of the ink jet recording apparatus and FIG. 2B is a perspective view of a head cartridge.

DESCRIPTION OF THE EMBODIMENTS

The present invention is described in more detail below by way of exemplary embodiments. In the present invention, when a compound is a salt, the salt is present as dissociated ions in an ink, but the expression "contain a salt" is used for convenience. In addition, an aqueous ink for ink jet is sometimes referred to simply as "ink". Physical property values are values at normal temperature (25°C), unless otherwise stated. As used herein, "C.I." is an abbreviation for "color index."

First, a factor for occurrence of sticking that is difficult to recover in the case of combined use of C.I. Pigment Yellow 74 and C.I. Pigment Yellow 155 is described. A very small fraction of C.I. Pigment Yellow 74 and C.I. Pigment Yellow 155 present in an aqueous ink is in a dissolved state. When a concentration of a pigment that is in a dissolved state exceeds the saturation solubility due to, for example, evaporation of a liquid component, a crystal of the pigment is generated. The evaporation of the liquid component is liable to occur near an ejection orifice, and hence the crystal of the pigment is especially liable to be generated. When both C.I. Pigment Yellow 74 and C.I. Pigment Yellow 155 are present, respective single crystals as well as cocrystals of those pigments are generated. As compared to the respective single crystals of C.I. Pigment Yellow 74 and C.I. Pigment Yellow 155, the cocrystals of those pigments are lower in solubility, and hence it is considered that redissolution of the pigment is difficult. Thus, it is presumed that, when C.I. Pigment Yellow 74 and C.I. Pigment Yellow 155 are used in combination, the sticking that is difficult to recover, which does not occur in the case of using each pigment alone, occurs, causing a state of ejecting the ink to be unstable. The phenomenon in which the solubility of the cocrystals is reduced is less liable to occur with other combinations of yellow pigments. That is, the reduction in sticking recovery property is a problem that uniquely arises when C.I. Pigment Yellow 74 and C.I. Pigment Yellow 155 are used in combination.

Under such presumption, the inventors of the present invention conducted further investigation. As a result of the investigation, the inventors have found that the sticking recovery property of the ink may be improved when the ink that contains C.I. Pigment Yellow 74 and C.I. Pigment Yellow 155 further contains a wax particle, and achieved the present invention.

The reason why the sticking recovery property of an ink is improved when the ink contains a wax particle is presumed by the inventors as described below. A wax particle is highly hydrophobic and is likely to be localized in a gas-liquid interface located around an ejection orifice. A crystal of a pigment is liable to be formed in the vicinity of the gas-liquid interface due to condensation of the pigment caused by evaporation of a liquid component. A pigment that is present in a dissolved state in an ink is highly hydrophobic, similarly to the wax particle. Thus, the pigment that is in the dissolved state and present in the vicinity of the gas-liquid interface is adsorbed to the wax particle, and hence the pigment that has been dissolved is scarcely present around the ejection orifice. As a result, any of a single crystal or a cocrystal is less liable to be generated. In this manner, generation of cocrystals of C.I. Pigment Yellow 74 and C.I. Pigment Yellow 155 is suppressed, and hence it is considered that the sticking recovery property of the ink is improved.

<Ink>

The ink according to the present invention is an aqueous ink for ink jet containing a plurality of kinds of pigments and a wax particle. The plurality of kinds of pigments include a first pigment and a second pigment. Further, the first pigment is C.I. Pigment Yellow 74, and the second pigment is C.I. Pigment Yellow 155. Now, components forming the ink according to the present invention and physical properties of the ink are described in detail.

(Pigment)

The ink contains a plurality of kinds of pigments. The plurality of kinds of pigments include C.I. Pigment Yellow 74 being a first pigment and C.I. Pigment Yellow 155 being a second pigment. In the following, the first pigment and the second pigment may be collectively described as "pigment" without distinction.

A content (% by mass) of C.I. Pigment Yellow 74 in the ink is preferably 0.10 % by mass or more to 10.00 % by mass or less with respect to the total mass of the ink. A content (% by mass) of C.I. Pigment Yellow 155 in the ink is preferably 0.10 % by mass or more to 10.00 % by mass or less with respect to the total mass of the ink. A total content (% by mass) of the plurality of kinds of pigments in the ink is preferably 0.20 % by mass or more to 15.00 % by mass or less, more preferably 1.00 % by mass or more to 10.00 % by mass or less with respect to the total mass of the ink. A ratio of a total content (% by mass) of C.I. Pigment Yellow 74 and C.I. Pigment Yellow 155 to the total content (% by mass) of the plurality of kinds of pigments in the ink is preferably 95.0 % by mass or more, and may be 100.0 % by mass.

A content $P_2$ (% by mass) of the second pigment (C.I. Pigment Yellow 155) in a total content $P$ (% by mass) of the plurality of kinds of pigments is preferably 20.00 % by mass or more to 80.00 % by mass or less. Further, the content $P_2$ is more preferably 50.00 % by mass or more to 80.00 % by mass or less, particularly preferably 55.00 % by mass or more to 80.00 % by mass or less. When the content $P_2$ (% by mass) of the second pigment in the total content $P$ (% by mass) of the plurality of kinds of pigments falls within the ranges described above, both the light fastness and color developability of a recorded image can be achieved at a particularly high level. When the mass ratio of the second pigment is excessively high, the improving effect on the color developability may be somewhat reduced. Meanwhile, when the mass ratio of the second pigment is excessively low, the improving effect on the light fastness may be somewhat reduced.

A content $P_1$ (% by mass) of the first pigment (C.I. Pigment Yellow 74) in the total content P (% by mass) of the plurality of kinds of pigments is preferably 20.00 % by mass or more to 80.00 % by mass or less. Further, the content $P_1$ is more preferably 20.00 % by mass or more to 50.00 % by mass or less, particularly preferably 20.00 % by mass or more to 45.00 % by mass or less. When the content $P_1$ (% by mass) of the first pigment in the total content P (% by mass) of the plurality of kinds of pigments falls within the ranges described above, both the light fastness and color developability of a recorded image can be achieved at a particularly high level. When the mass ratio of the first pigment is excessively high, the improving effect on the light fastness may be somewhat reduced. Meanwhile, when the mass ratio of the first pigment is excessively low, the improving effect on the color developability may be somewhat reduced.

A cumulative 50% particle diameter ($D_{50}$) of the pigment (each of the first pigment and the second pigment) on a volume basis is preferably 10 nm or more to 300 nm or less. When the cumulative 50% particle diameter of the pigment on a volume basis is less than 10 nm, a ratio of the pigment that is present in a dissolved state in the ink may be high, with the result that the improving effect on the sticking recovery property may be somewhat reduced. Meanwhile, when the cumulative 50% particle diameter of the pigment on a volume basis is more than 300 nm, the smoothness of a surface of the recorded image may be somewhat reduced, with the result that the improving effect on the color developability may be somewhat reduced.

As a dispersion system for the pigment, a system of dispersing the pigment in an aqueous medium by causing a resin dispersant to physically adsorb to a particle surface of the pigment is preferred. Any resin may be used as the resin dispersant as long as the resin is usable for an ink for ink jet. It is preferred that, among resins, a water-soluble resin be used. A mass ratio of a content (% by mass) of the pigment in the ink to a content (% by mass) of the resin dispersant is preferably 0.30 times or more to 10.00 times or less. The resin dispersant (resin) to be used for dispersing the plurality of kinds of pigments may be the same resin or different resins. The phrase "resin is water-soluble" as used herein means that, when the resin is neutralized with an alkali corresponding to its acid value, the resin is present in an aqueous medium under a state in which a particle having a particle diameter to be measured by a dynamic light scattering method is not formed.

(Wax particle)

The ink contains a wax particle. The wax particle is particle formed of a wax. The wax may be a composition blended with a component except the wax or may be the wax itself. The wax particle may be dispersed with a dispersant, such as a surfactant or a resin.

The wax is an ester of a higher monohydric or dihydric alcohol that is insoluble in water and a fatty acid in a narrow sense. Accordingly, animal-based waxes and plant-based waxes are included in the category of the wax but oils and fats are not included therein. High-melting point fats, mineral-based waxes, petroleum-based waxes and blends and modified products of various waxes are included therein in a broad sense. The waxes in a broad sense may each be used in the ink of the present invention without any particular limitation. The waxes in a broad sense may be classified into natural waxes, synthetic waxes, blends thereof (blended waxes) and modified products thereof (modified waxes).

Examples of the natural wax may include: animal-based waxes, such as beeswax, a spermaceti wax and lanolin; plant-based waxes, such as a Japan wax, a carnauba wax, a sugar cane wax, a palm wax, a candelilla wax and a rice wax; mineral-based waxes such as a montan wax; and petroleum-based waxes, such as a paraffin wax, a microcrystalline wax and petrolatum. Examples of the synthetic wax may include hydrocarbon-based waxes, such as a Fischer-Tropsch wax and polyolefin waxes (e.g., polyethylene wax and polypropylene wax). The blended waxes are mixtures of the above-mentioned various waxes. The modified waxes are obtained by subjecting the above-mentioned various waxes to modification treatment, such as oxidation, hydrogenation, alcohol modification, acrylic modification or urethane modification. In particular, the material for forming the wax particle preferably contains an oxidized-polyethylene wax, and the wax particle is more preferably substantially formed of an oxidized-polyethylene wax. That is, the proportion of the oxidized-polyethylene wax in the wax component forming the wax particle is preferably 95.0 mass% or more, more preferably 98.0 mass% or more, and may be 100.0 mass%.

An acid value of the wax particle is preferably 20 mgKOH/g or less, more preferably 15 mgKOH/g or less. When the acid value of the wax particle is more than 20 mgKOH/g, adsorption to the pigment may be weakened due to the electric charge repulsion, with the result that the improving effect on the sticking recovery property of the ink may be somewhat reduced. Further, when the acid value of the wax particle is more than 20 mgKOH/g, the localization to the gas-liquid interface may be alleviated, with the result that the improving effect on the sticking recovery property of the ink may be somewhat reduced. A lower limit of the acid value of the wax particle is not particularly limited, and is only required to be, for example, 0.1 mgKOH/g or more, and is preferably 0.5 mgKOH/g or more.

A cumulative 50% particle diameter ($D_{50}$) of the wax particle on a volume basis is preferably 140 nm or less, more preferably 20 nm or more to 120 nm or less. When the ink contains the wax particle having the cumulative 50% particle diameter ($D_{50}$) on a volume basis that falls within the ranges described above, the sticking recovery property of the ink can be further enhanced.

A content of the wax particle in the ink is preferably 0.01 % by mass or more to 3.00 % by mass or less, more preferably 0.01 % by mass or more to 1.00 % by mass or less with respect to the total mass of the ink. Further, a content of the first pigment in the ink with respect to the total mass of the ink is represented by $P_1$ (% by mass), a content of the second pigment in the ink with respect to the total mass of the ink is represented by $P_2$ (% by mass), and a content of the wax particle in the ink with respect to the total mass of the ink is represented by W (% by mass). In this case, when the total content of the first pigment and the second pigment ($P_1+P_2$) is excessively large, the amount of the pigment that is present in the dissolved state in the ink is large, and hence the amount of the wax particle for adsorbing the pigment is insufficient, with the result that the cocrystal is liable to be generated. Further, when a difference between the content of the first pigment and the content of the second pigment ($|P_1-P_2|$) is excessively small, the cocrystal is liable to be generated. Further, when the content (W) of the wax particle is excessively small, the amount of the wax particle with respect to the pigment that is present in the dissolved state in the ink is insufficient, with the result that the cocrystal is liable to be generated. From the description above, it is preferred that the content $P_1$ (% by mass) of the first pigment, the content $P_2$ (% by mass) of the second pigment and the content W (% by mass) of the wax particle satisfy the relationship of the formula (1) described below. When the relationship of the formula (1) described below is satisfied, the sticking recovery property of the ink can be enhanced. A lower limit of $(P_1+P_2)-|P_2-P_1|-W\times10$ is preferably 0.0 or more, more preferably 0.1 or more, particularly preferably 1.0 or more. A unit of the value calculated by the formula (1) is "%".

$$(P_1+P_2)-|P_2-P_1|-W\times10\leq2.0 \quad\cdots(1)$$

The mass ratio of the total content P (% by mass) of the plurality of kinds of pigments in the ink to the content W (% by mass) of the wax particle is preferably 10.0 times or more to 250.0 times or less. When the mass ratio falls within this range, the balance of the contents of the pigment and the wax particle is satisfactory, thereby being capable of further enhancing the sticking recovery property of the ink. The mass ratio is more preferably 12.5 times or more, still more preferably 100.0 times or less.

[Aqueous Medium]

The ink of the invention is an aqueous ink containing an aqueous medium, which is water or a mixture of water and a water-soluble organic solvent. Deionized water (ion-exchanged water) is preferably used as the water. The content (% by mass) of the water in the ink is preferably 50.00 % by mass or more to 95.00 % by mass or less with respect to the total mass of the ink. Solvents that may be used in an ink for ink jet, such as alcohols, glycols, (poly)alkylene glycols, nitrogen-containing compounds and sulfur-containing compounds, may each be used as the water-soluble organic solvent. The content (% by mass) of the water-soluble organic solvent in the ink is preferably 3.00 % by mass or more to 50.00 % by mass or less with respect to the total mass of the ink. This content includes the first water-soluble organic solvent, which will be described later.

It is more preferred that the ink contains a first water-soluble organic solvent having an SP value of 11.5 $(cal/cm^3)^{1/2}$ or more to 15.0 $(cal/cm^3)^{1/2}$ or less as determined by the Fedors method. C.I. Pigment Yellow 155 has an SP value of 14.1, and C.I. Pigment Yellow 74 has an SP value of 14.2. An organic compound having a small difference in SP value easily dissolves the pigment. Thus, when the ink contains the first water-soluble organic solvent having an SP value of 11.5 $(cal/cm^3)^{1/2}$ or more to 15.0 $(cal/cm^3)^{1/2}$ or less, the dissolving effect on the cocrystal of those pigments is enhanced, thereby being capable of further improving the sticking recovery property.

A content (% by mass) of the first water-soluble organic solvent in the ink with respect to the total mass of the ink is preferably 5.00 % by mass or more to 15.00 % by mass or less. When the content (% by mass) of the first water-soluble organic solvent is less than 5.00% by mass, the improving effect on the sticking recovery property may be somewhat reduced. Meanwhile, when the content (% by mass) of the first water-soluble organic solvent is more than 15.00 % by mass, a permeation rate of the ink into a recording medium is high, and hence the pigment is liable to sink, with the result that the improving effect on the color developability of an image may be somewhat reduced. Further, the mass ratio of the content (% by mass) of the first water-soluble organic solvent in the ink to the total content (% by mass) of the plurality of kinds of pigments is preferably 0.75 times or more to 3.00 times or less.

The SP value ($\delta$: solubility parameter) is a value calculated by the Fedors method based on the formula (A) described below. As a difference between an SP value of a solute and an SP value of a solvent is smaller, the affinity of the solute to the solvent tends to be greater. A molar heat of evaporation ($\Delta$Evap) of a compound and a molar volume (V) of a compound at 25°C can each be determined by addition of constant values belonging to an atom and a group in a molecule. A unit "cal" is generally used as a unit of the SP value. In the case of converting to an SI unit system, it is only required that the relationship of "$(cal/cm^3)^{1/2}=2.046\times10^3 (J/m^3)^{1/2}$" be used. In the description below, the unit of the SP value may be omitted. The "water-soluble organic solvent" typically means a liquid. However, in the present invention, a water-soluble organic solvent that is in a solid state at 25°C (normal temperature) is also included in the water-soluble organic solvent. Specific examples of the water-soluble organic solvent that is generally used for an ink and is in a solid state at 25°C may include 1,6-hexanediol, trimethylolpropane, ethylene urea, urea and polyethylene glycol having a number-average molecular weight of 1,000.

$$\delta = \sqrt{\frac{\Delta E_{vap}}{V}} \qquad \cdots \text{(A)}$$

In the formula (A) described above, $\Delta$Evap represents a molar heat of evaporation (cal/mol) of a compound, and V represents a molar volume ($cm^3$/mol) of a compound at 25°C.

Examples of the first water-soluble organic solvent may include 1,4-butanediol (15.0), diethylene glycol (15.0), ethylene glycol (14.8), 1,3-butanediol (14.8), 2-methyl-1,3-propanediol (14.8), 1,2,6-hexanetriol (14.5), urea (14.4), ethylene urea (14.2), 1,5-pentanediol (14.2), formamide (14.0), methanol (13.8), triethanolamine (13.7), triethylene glycol (13.6), 1,2-pentanediol (13.5), 1,6-hexanediol (13.5), 3-methyl-1,5-pentanediol (13.4), 2-ethylpropane-1,3-diol (13.2), 2-methylpentane-2,4-diol (13.1), 1,2-butanediol (12.8), tetraethylene glycol (12.8), polyethylene glycol (12.8) having a number-average molecular weight of 200, ethanol (12.6), 2-pyrrolidone (12.6), ethylene glycol monomethyl ether (12.0), 1,2-hexanediol (11.8), n-propanol (11.8), isopropanol (11.6), ethylene glycol monoethyl ether (11.5) and N-methyl-2-pyrrolidone (11.5). Values in parentheses given to the water-soluble organic solvents are SP values calculated based on the formula (A).

Examples of the water-soluble organic solvent that is not included in the first water-soluble organic solvent may include glycerin (20.0), 1,3-propanediol (16.1), 1,2-propanediol (15.9), trimethylolpropane (15.9), 1,3-dimethyl -2-imidazolidinone (11.4), n-butanol (11.3), diethylene glycol monomethyl ether (11.2), 2-butanol (11.1), tert-butanol (10.9), polyethylene glycol (10.5) having a number-average molecular weight of 600 and polyethylene glycol (10.1) having a number-average molecular weight of 1,000. Values in parentheses given to the water-soluble organic solvents are SP values calculated based on the formula (A).

(Surfactant)

It is preferred that the ink further contain a surfactant represented by the following formula (2) that is a block copolymer in which a ratio of a propylene oxide block is 80 % by mass or more.

$$HO\text{-}(CH_2CH_2O)_a\text{-}(CH_2CH_2(CH_3)O)_b\text{-}(CH_2CH_2O)_c\text{-}H \cdots \qquad (2)$$

In the formula (2) described above, a$\geq$1.0, b$\geq$1.0 and c$\geq$1.0 are satisfied.

In the formula (2), "a" and "c" each represent a number of moles added of an ethylene oxide block (ethylene oxide group), and "b" represents a number of moles added of a propylene oxide block (propylene oxide group). When the ink contains the surfactant described above, the sticking recovery property of the ink can be further improved. "a" and "c" each independently preferably represent 10.0 or less, and "b" preferably represents 20.0 or less. Further, a ratio of the propylene oxide block is preferably 95 % by mass or less, more preferably 90 % by mass or less. The surfactant represented by the formula (2) is a mixture having a variation in molecular weight distribution to some extent. Thus, the molecular weight and the number of moles added of each group are shown as average values. However, such a surfactant is expressed herein as including "surfactant represented by the formula (2)" including the case in which the surfactant is a mixture.

The ratio of the propylene oxide block in the surfactant can be determined as described below from the ink containing the surfactant represented by the formula (2). First, the ink is dissolved in an organic solvent (eluent) so that a measurement sample is prepared. For this measurement sample, components of the ink are separated by gel permeation chromatography with a differential refractive index detector. In this case, a kind of the organic solvent used as an eluent and a kind and the number of columns used for the separation are suitably changed so that surfactants having different weight-average molecular weights or compositions can be separated. Further, the surfactant is isolated by fractionating the eluent that has passed through the differential refractive index detector and concentrating the component in the fraction to dryness. The obtained surfactant is subjected to NMR so that the number of moles added of the ethylene oxide group (value of a+c) and the number of moles added of the propylene oxide group (value of "b") can be found. The ratio of the propylene oxide block in the surfactant can be calculated from "n" and "m" determined in such a manner.

When the ink contains the surfactant described above, it is preferred that the content W (% by mass) of the wax particle and the content E (% by mass) of the surfactant in the ink satisfy the relationship of the formula (3) described below. When the content of the surfactant is adjusted so as to satisfy the relationship of the formula (3) described below, the sticking recovery property of the ink can be further improved.

$$(E/W) \times 100 \geq 100.0 \cdots (3)$$

(Other Components)

The ink may contain any one of various additives, such as a surfactant except the aforementioned surfactant, a pH adjuster, an antifoaming agent, a rust inhibitor, an antiseptic, an antifungal agent, an antioxidant, an anti-reducing agent and a chelating agent, as required. Since it is not necessary to increase the content of "other components" in the ink and it is difficult to influence the effect of the present invention, the SP value is not specified in the present invention.

[Physical Properties of Ink]

The ink of the invention is an aqueous ink to be applied to an ink jet system. Accordingly, from the viewpoint of reliability, it is preferred that the physical property values of the ink be appropriately controlled. Specifically, the viscosity of the ink at 25°C is preferably 1.0 mPa·s or more to 10.0 mPa·s or less, more preferably 1.0 mPa·s or more to 5.0 mPa·s or less. The surface tension of the ink at 25°C is preferably 20 mN/m or more to 60 mN/m or less, more preferably 25 mN/m or more to 45 mN/m or less. The pH of the ink at 25°C is preferably 7.0 or more to 10.0 or less.

<Ink Cartridge>

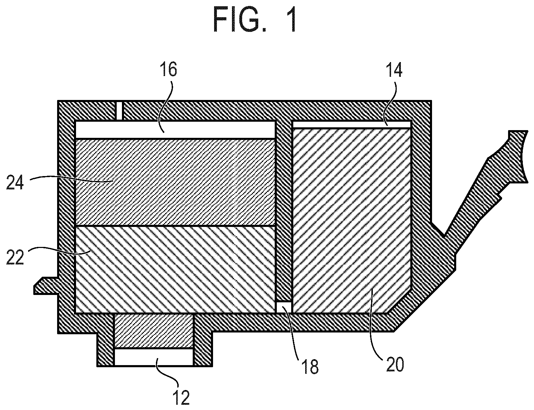

An ink cartridge of the present invention includes an ink and an ink storage portion configured to store the ink. In addition, the ink stored in the ink storage portion is the aqueous ink of the present invention described above. FIG. 1 is a sectional view for schematically illustrating an ink cartridge according to one embodiment of the present invention. As illustrated in FIG. 1, an ink supply port 12 for supplying an ink to a recording head is arranged on the bottom surface of the ink cartridge. The inside of the ink cartridge is the ink storage portion for storing the ink. The ink storage portion includes an ink storage chamber 14 and an absorbent storage chamber 16 and the chambers communicate to each other through a communication port 18. In addition, the absorbent storage chamber 16 communicates to the ink supply port 12. While a liquid ink 20 is stored in the ink storage chamber 14, absorbents 22 and 24 each configured to hold the ink in a state of being impregnated therewith are stored in the absorbent storage chamber 16. The ink storage portion may be of a form that is free of an ink storage chamber configured to store the liquid ink and is configured to hold the total amount of the ink to be stored with the absorbents. In addition, the ink storage portion may be of a form that is free of an absorbent and is configured to store the total amount of the ink in a liquid state. Further, an ink cartridge of a form formed to include the ink storage portion and a recording head may be adopted.

<Ink Jet Recording Method>

An ink jet recording method of the present invention is a method including recording an image on a recording medium by ejecting the aqueous ink of the present invention described above from a recording head of an ink jet system. A system of ejecting the ink is, for example, a system involving applying mechanical energy to the ink or a system involving applying thermal energy to the ink. In the present invention, the system involving applying the thermal energy to the ink to eject the ink is particularly preferably adopted. According to the present invention, even if a recording head of a system for ejecting ink by applying thermal energy, which tends to cause evaporation of ink from an ejection orifice, can be used, fixing recovery of ink can be improved. The step of the ink jet recording method only needs to be a known step except that the ink of the present invention is used.

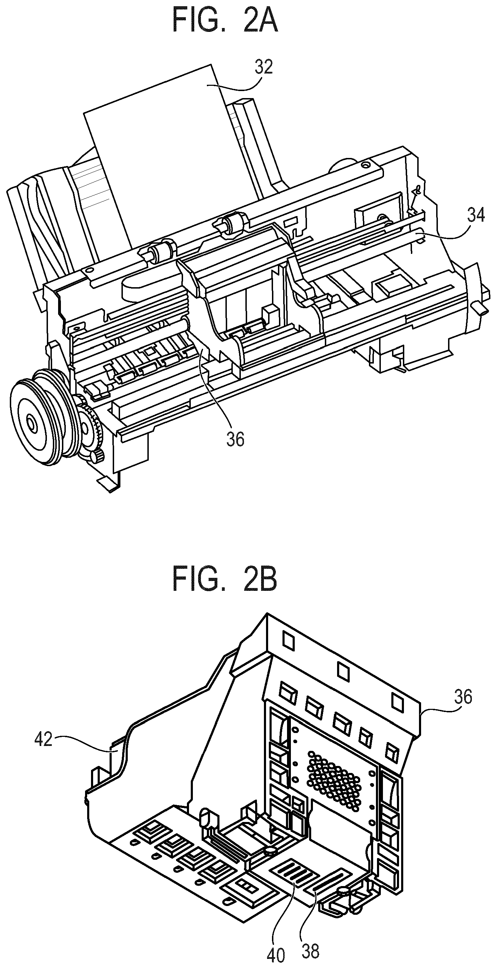

FIG. 2A and FIG. 2B are views for schematically illustrating an example of an ink jet recording apparatus to be used in the ink jet recording method of the present invention, in which FIG. 2A is a perspective view of the main portion of the ink jet recording apparatus and FIG. 2B is a perspective view of a head cartridge. A conveying unit (not shown) configured to convey a recording medium 32 and a carriage shaft 34 are arranged in the ink jet recording apparatus. A head cartridge 36 may be mounted on the carriage shaft 34. The head cartridge 36 includes recording heads 38 and 40 and is formed so that an ink cartridge 42 may be set therein. While the head cartridge 36 is conveyed along the carriage shaft 34 in a main scanning direction, the ink (not shown) is ejected from the recording heads 38 and 40 toward the recording medium 32. Then, the recording medium 32 is conveyed by the conveying unit (not shown) in a sub-scanning direction. Thus, the image is recorded on the recording medium 32.

[Examples]

The present invention is described in more detail below by way of Examples and Comparative Examples. The present invention is by no means limited to Examples below without departing from the gist of the present invention. "Part(s)" and "%" with regard to the description of the amounts of components are by mass, unless otherwise stated.

<Measurement Methods for Physical Property Values>

(Cumulative 50% Particle Diameter ($D_{50}$) of Wax Particle on Volume Basis)

With regard to a sample obtained by diluting a dispersion liquid of a wax particle with pure water, a particle size analyzer (product name: "MicrotracWAVE", manufactured by MicrotracBEL Corp.) employing a dynamic light scattering method was used to measure the cumulative 50% particle diameter ($D_{50}$) on a volume basis. Measurement conditions were as follows: SetZero: 30 seconds, the number of measurements: 3 times, measurement time: 120 seconds, shape: true spherical shape, refractive index: 1.59.

(Acid Value of Wax Particle)

A sample obtained by dispersing or dissolving the wax particle in water was prepared. Then, for the prepared sample, an automatic potentiometric titrator was used to perform potentiometric titration with a methyl glycol chitosan 200/N titrant, and the number of anion functional groups per 1 g of the wax particle was calculated. Further, the calculated number of anion functional groups was converted to the mass of potassium hydroxide, and an acid value (mgKOH/g) of the wax particle was calculated. An automatic potentiometric titrator with the product name "AT-510" (manufactured by Kyoto Electronics Manufacturing Co., Ltd.) was used.

<Production of Pigment Dispersion Liquid>

(Pigment Dispersion Liquid 1)

12.00 Parts of a C.I. Pigment Yellow 74, 24.0 parts of an aqueous solution of a resin dispersant and 64.0 parts of ion-exchanged water were mixed to provide a mixture. As the aqueous solution of a resin dispersant, an aqueous solution in which a content of a resin (solid content) was 20.0%, which was obtained by neutralizing a styrene-acrylic acid copolymer having an acid value of 170 mgKOH/g and a weight-average molecular weight of 8,000 with a 10.0% sodium hydroxide aqueous solution, was used. The resultant mixture was placed in a batch-type vertical sand mill (manufactured by Aimex Co., Ltd.), and 85 parts of 0.3 mm zirconia beads were filled into the sand mill. The mixture was subjected to dispersion treatment while being cooled with water for 3 hours. Subsequently, the non-dispersed material including coarse particles was removed by centrifugation treatment. Further, the resultant was filtered with a cellulose acetate filter (manufactured by Advantec Toyo Kaisha, Ltd.) having a pore size of 3.0 $\mu$m under pressure to adjust a pigment dispersion liquid 1 in which a content of the pigment was 10.00% and a content of the resin was 4.00%.

(Pigment Dispersion Liquid 2)

A pigment dispersion liquid 2 was prepared in the same manner as the above described pigment dispersion liquid 1 except that the type of pigment was changed to C.I. pigment yellow 155. The pigment content in the pigment dispersion liquid 2 was 10.00% and the resin content was 4.00%.

(Pigment Dispersion Liquid 3)

A pigment dispersion liquid 3 was prepared in the same manner as the above described pigment dispersion liquid 1 except that the type of pigment was changed to C.I. pigment yellow 128. The pigment content in the pigment dispersion liquid 3 was 10.00% and the resin content was 4.00%.

<Preparation of Wax Particle>

An autoclave with a capacity of 2.0 L, including a temperature gauge, a stirring device, a temperature controller, a pressure gauge, a gas introduction tube and a gas exhaust tube was prepared. 500 Parts of a material shown in Table 1 was placed in the prepared autoclave and then heated. After the internal temperature had reached 140°C, the material was stirred at a stirring speed of 250 rpm. Air and oxygen were introduced at rates of 1.2 L/min and 0.18 L/min, respectively, into the molten material in the autoclave. The wax particles were oxidized to achieve the acid values shown in Table 1 by introducing air and oxygen while maintaining the internal pressure at 0.69 MPa. The reaction was then stirred continuously at a reaction temperature of 140°C. and a stirring speed of 250rpm to obtain the product. Thus, a product was obtained. The obtained product was subjected to dispersion treatment with an ultrasonic homogenizer to provide a dispersed product. Ion-exchanged water was added to the obtained dispersed product to provide a water dispersion liquid of the wax particle with the content of the wax particle being 10.00%. Acid values of the wax particles and the cumulative 50% particle diameters ($D_{50}$) of the wax particles on a volume basis are shown in Table 1.

Table 1

| Wax particle | Materials | Manufacturing conditions and characteristics of wax particles | | |
| --- | --- | --- | --- | --- |
| | | Cumulative 50% particle diameter on a volume basis ($D_{50}$(nm)) | Acid value (mgKOH/g) | |
| 1 | Oxidized polyethylene | 40 | 10 | |
| 2 | Oxidized polypropylene | 25 | 5 | |
| 3 | Ceresin | 100 | 0 | |
| 4 | Ozokerite | 100 | 0 | |
| 5 | Montan | 100 | 5 | |
| 6 | Carnauba | 100 | 0 | |
| 7 | Shellac | 100 | 0 | |
| 8 | Oxidized polyethylene | 40 | 0.1 | |
| 9 | Oxidized polyethylene | 40 | 20 | |
| 10 | Oxidized polyethylene | 40 | 30 | |
| 11 | Oxidized polyethylene | 20 | 10 | |
| 12 | Oxidized polyethylene | 140 | 10 | |
| 13 | Oxidized polyethylene | 200 | 10 | |
| 14 | Oxidized polypropylene | 200 | 30 | |

<Synthesis of Surfactant>

The surfactants 1 to 3 represented by the formula (2) were synthesized by a conventional method. Specifically, the polypropylene glycol having a molecular weight of such a value that "b" in the formula (2) has a value shown in Table 2 is added with a component corresponding to the ethylene oxide block such that "a+c" in the formula (2) also has a value shown in Table 2. In such a manner, a surfactant having such structure that the ethylene oxide block is bonded to both ends of the propylene oxide block was synthesized. The NMR analysis was performed on the synthesized surfactant, and a ratio (%) of the propylene oxide block was calculated based on the amounts of the ethylene oxide block and the propylene oxide block thus obtained. Results are shown in Table 2.

Table 2

| Surfactant | Formula (2) | | Ratio of propylene oxide block (%) |
| --- | --- | --- | --- |
| | a+c | b | |
| 1 | 3.4 | 16.4 | 86 |
| 2 | 5.0 | 15.2 | 80 |
| 3 | 8.4 | 12.6 | 66 |

Properties of surfactant

<Preparation of Ink>

Respective components (unit: %) shown in the upper section of each of Tables 3-1 to 3-5 were mixed and sufficiently stirred. After that, the mixture was filtered with a polypropylene filter having a pore size of $1.0\ \mu$m (manufactured by Advantec Toyo Kaisha, Ltd.) under pressure to prepare each of the inks. The characteristics of the inks are shown in the lower section of each of Tables 3-1 to 3-5. The pH of each of the prepared inks was adjusted with a 0.5 mol/L sulfuric acid aqueous solution so as to fall within a range of from 8.5 to 9.0. In Tables 3-1 to 3-5, "AQUACER 539" is the product name of a modified paraffin wax (content of solid content 35%, made by BYK, cumulative 50% particle diameter on a volume basis: 50nm and acid value: 10 mgKOH/g). In addition, the term "ACETYLENOL E60" is the product name of a nonionic acetylene glycol-based surfactant (manufactured by Kawaken Fine Chemicals Co., Ltd.), and the term "Proxel GXL" is the product name of an antiseptic (manufactured by Arch Chemicals, Inc.).

Table 3-1

| Compositions and properties of inks | | | | | | | | | | | | |
|---|---|---|---|---|---|---|---|---|---|---|---|---|
| | Example | | | | | | | | | | | |
| | 1 | 2 | 3 | 4 | 5 | 6 | 7 | 8 | 9 | 10 | 11 | 12 |
| Type of wax particle | 1 | 2 | 3 | 4 | 5 | 6 | 7 | 8 | 9 | 10 | 11 | 12 |
| Pigment dispersion liquid 1 | 20.00 | 20.00 | 20.00 | 20.00 | 20.00 | 20.00 | 20.00 | 20.00 | 20.00 | 20.00 | 20.00 | 20.00 |
| Pigment dispersion liquid 2 | 30.00 | 30.00 | 30.00 | 30.00 | 30.00 | 30.00 | 30.00 | 30.00 | 30.00 | 30.00 | 30.00 | 30.00 |
| Pigment dispersion liquid 3 | | | | | | | | | | | | |
| Aqueous dispersion liquid of wax particle | 3.00 | 3.00 | 3.00 | 3.00 | 3.00 | 3.00 | 3.00 | 3.00 | 3.00 | 3.00 | 3.00 | 3.00 |
| AQUACER539 | | | | | | | | | | | | |
| Glycerin (20.0) | 10.00 | 10.00 | 10.00 | 10.00 | 10.00 | 10.00 | 10.00 | 10.00 | 10.00 | 10.00 | 10.00 | 10.00 |
| Trimethylolpropane (15.9) | | | | | | | | | | | | |
| 1,4-Butanediol (15.0) | | | | | | | | | | | | |
| Triethylene glycol (13.6) | 3.00 | 3.00 | 3.00 | 3.00 | 3.00 | 3.00 | 3.00 | 3.00 | 3.00 | 3.00 | 3.00 | 3.00 |
| 1,2-Propanediol (13.5) | | | | | | | | | | | | |
| 1,6-Hexanediol (13.5) | 3.00 | 3.00 | 3.00 | 3.00 | 3.00 | 3.00 | 3.00 | 3.00 | 3.00 | 3.00 | 3.00 | 3.00 |
| 2-Pyrrolidone (12.6) | | | | | | | | | | | | |
| 1,2-Hexanediol (11.8) | 3.00 | 3.00 | 3.00 | 3.00 | 3.00 | 3.00 | 3.00 | 3.00 | 3.00 | 3.00 | 3.00 | 3.00 |
| Ethylene grycol monoethyl ether (11.5) | | | | | | | | | | | | |
| Diethylene glycol monomethyl ether (11.2) | | | | | | | | | | | | |
| Surfactant 1 | 0.50 | 0.50 | 0.50 | 0.50 | 0.50 | 0.50 | 0.50 | 0.50 | 0.50 | 0.50 | 0.50 | 0.50 |
| Surfactant 2 | | | | | | | | | | | | |
| Surfactant 3 | | | | | | | | | | | | |
| ACETYLENOL E60 | 0.50 | 0.50 | 0.50 | 0.50 | 0.50 | 0.50 | 0.50 | 0.50 | 0.50 | 0.50 | 0.50 | 0.50 |
| Poly oxyethylene alkylether | | | | | | | | | | | | |
| Proxel GXL | 0.20 | 0.20 | 0.20 | 0.20 | 0.20 | 0.20 | 0.20 | 0.20 | 0.20 | 0.20 | 0.20 | 0.20 |
| Ion-exchanged water | 26.80 | 26.80 | 26.80 | 26.80 | 26.80 | 26.80 | 26.80 | 26.80 | 26.80 | 26.80 | 26.80 | 26.80 |
| Content of first pigment $P_1$ (%) | 2.00 | 2.00 | 2.00 | 2.00 | 2.00 | 2.00 | 2.00 | 2.00 | 2.00 | 2.00 | 2.00 | 2.00 |

(continued)

| Compositions and properties of inks | | | | | | | | | | | | |
|---|---|---|---|---|---|---|---|---|---|---|---|---|
| | Example | | | | | | | | | | | |
| | 1 | 2 | 3 | 4 | 5 | 6 | 7 | 8 | 9 | 10 | 11 | 12 |
| Content of second pigment $P_2$ (%) | 3.00 | 3.00 | 3.00 | 3.00 | 3.00 | 3.00 | 3.00 | 3.00 | 3.00 | 3.00 | 3.00 | 3.00 |
| Content of pigment P (%) | 5.00 | 5.00 | 5.00 | 5.00 | 5.00 | 5.00 | 5.00 | 5.00 | 5.00 | 5.00 | 5.00 | 5.00 |
| Content of wax particle W (%) | 0.30 | 0.30 | 0.30 | 0.30 | 0.30 | 0.30 | 0.30 | 0.30 | 0.30 | 0.30 | 0.30 | 0.30 |
| Content of first water-soluble organic solvent S (%) | 9.00 | 9.00 | 9.00 | 9.00 | 9.00 | 9.00 | 9.00 | 9.00 | 9.00 | 9.00 | 9.00 | 9.00 |
| Content of first surfactant E (%) | 0.50 | 0.50 | 0.50 | 0.50 | 0.50 | 0.50 | 0.50 | 0.50 | 0.50 | 0.50 | 0.50 | 0.50 |
| Value of $(P_1/P)*100$ (%) | 40.0 | 40.0 | 40.0 | 40.0 | 40.0 | 40.0 | 40.0 | 40.0 | 40.0 | 40.0 | 400 | 40.0 |
| Value of $(P_2/P)*100$ (%) | 60.0 | 60.0 | 60.0 | 60.0 | 60.0 | 60.0 | 60.0 | 60.0 | 60.0 | 60.0 | 60.0 | 60.0 |
| Value of $(P_1+P_2)-|P_2-P_1|-W*10$ (%) | 1.0 | 1.0 | 1.0 | 1.0 | 1.0 | 1.0 | 1.0 | 1.0 | 1.0 | 1.0 | 1.0 | 1.0 |
| Value (times) of P/W | 16.7 | 16.7 | 16.7 | 16.7 | 16.7 | 16.7 | 16.7 | 16.7 | 16.7 | 16.7 | 16.7 | 16.7 |
| Value of $(E/W)*100$ (%) | 166.7 | 166.7 | 166.7 | 166.7 | 166.7 | 166.7 | 166.7 | 166.7 | 166.7 | 166.7 | 166.7 | 166.7 |

Table 3-2

Compositions and properties of inks

| | Example | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| Type of wax particle | 13 | 1 | 1 | 1 | 1 | 1 | 1 | 1 | 1 | 1 | 1 | 1 |
| Pigment dispersion liquid 1 | 20.00 | 20.00 | 15.00 | 35.00 | 20.00 | 30.00 | 25.00 | 12.00 | 12.00 | 20.00 | 20.00 | 20.00 |
| Pigment dispersion liquid 2 | 30.00 | 30.00 | 45.00 | 35.00 | 30.00 | 20.00 | 25.00 | 48.00 | 53.00 | 30.00 | 30.00 | 30.00 |
| Pigment dispersion liquid 3 | | | | | | | | | | | | |
| Aqueous dispersion liquid of wax particle | 3.00 | 3.90 | 1.00 | 4.50 | 0.50 | 3.00 | 3.00 | 3.00 | 3.00 | 6.00 | 5.00 | 4.00 |
| AQUACER539 | | | | | | | | | | | | |
| Glycerin (20.0) | 10.00 | 10.00 | 10.00 | 10.00 | 10.00 | 10.00 | 10.00 | 10.00 | 10.00 | 10.00 | 10.00 | 10.00 |
| Trimethylolpropane (15.9) | | | | | | | | | | | | |
| 1,4-Butanediol (15.0) | | | | | | | | | | | | |
| Triethylene glycol (13.6) | 3.00 | 3.00 | 3.00 | 3.00 | 3.00 | 3.00 | 3.00 | 3.00 | 3.00 | 3.00 | 3.00 | 3.00 |
| 1,2-Propanediol (13.5) | | | | | | | | | | | | |
| 1,6-Hexanediol (13.5) | 3.00 | 3.00 | 3.00 | 3.00 | 3.00 | 3.00 | 3.00 | 3.00 | 3.00 | 3.00 | 3.00 | 3.00 |
| 2-Pyrrolidone (12.6) | | | | | | | | | | | | |
| 1,2-Hexanediol (11.8) | 3.00 | 3.00 | 3.00 | 3.00 | 3.00 | 3.00 | 3.00 | 3.00 | 3.00 | 3.00 | 3.00 | 3.00 |
| Ethylene grycol monoethyl ether (11.5) | | | | | | | | | | | | |
| Diethylene glycol monomethyl ether (11.2) | | | | | | | | | | | | |
| Surfactant 1 | 0.50 | 1.00 | 0.50 | 0.50 | 0.50 | 0.50 | 0.50 | 0.50 | 0.50 | 0.60 | 0.60 | 0.60 |
| Surfactant 2 | | | | | | | | | | | | |
| Surfactant 3 | | | | | | | | | | | | |
| ACETYLENOL E60 | 0.50 | 0.50 | 0.50 | 0.50 | 0.50 | 0.50 | 0.50 | 0.50 | 0.50 | 0.50 | 0.50 | 0.50 |
| Polyoxyethylene alkylether | | | | | | | | | | | | |
| Proxel GXL | 0.20 | 0.20 | 0.20 | 0.20 | 0.20 | 0.20 | 0.20 | 0.20 | 0.20 | 0.20 | 0.20 | 0.20 |
| Ion-exchanged water | 26.80 | 25.40 | 18.80 | 5.30 | 29.30 | 26.80 | 26.80 | 16.80 | 11.80 | 23.70 | 24.70 | 25.70 |
| Content of first pigment $P_1$ (%) | 2.00 | 2.00 | 1.50 | 3.50 | 2.00 | 3.00 | 2.50 | 1.20 | 1.20 | 2.00 | 2.00 | 2.00 |

(continued)

EP 4 417 658 B1

| Compositions and properties of inks | | | | | | | | | | | | |
|---|---|---|---|---|---|---|---|---|---|---|---|---|
| | Example | | | | | | | | | | | |
| | 13 | 14 | 15 | 16 | 17 | 18 | 19 | 20 | 21 | 22 | 23 | 24 |
| Content of second pigment $P_2$ (%) | 3.00 | 3.00 | 4.50 | 3.50 | 3.00 | 2.00 | 2.50 | 4.80 | 5.30 | 3.00 | 3.00 | 3.00 |
| Content of pigment P (%) | 5.00 | 5.00 | 6.00 | 7.00 | 5.00 | 5.00 | 5.00 | 6.00 | 6.50 | 5.00 | 5.00 | 5.00 |
| Content of wax particle W (%) | 0.30 | 0.39 | 0.10 | 0.45 | 0.05 | 0.30 | 0.30 | 0.30 | 0.30 | 0.60 | 0.50 | 0.40 |
| Content of first water-soluble organic solvent S (%) | 9.00 | 9.00 | 9.00 | 9.00 | 9.00 | 9.00 | 9.00 | 9.00 | 9.00 | 9.00 | 9.00 | 9.00 |
| Content of first surfactant E (%) | 0.50 | 1.00 | 0.50 | 0.50 | 0.50 | 0.50 | 0.50 | 0.50 | 0.50 | 0.60 | 0.60 | 0.60 |
| Value of $(P_1/P)*100$ (%) | 40.0 | 40.0 | 25.0 | 50.0 | 40.0 | 60.0 | 50.0 | 20.0 | 18.5 | 40.0 | 40.0 | 40.0 |
| Value of $(P_2/P)*100$ (%) | 60.0 | 60.0 | 75.0 | 50.0 | 60.0 | 40.0 | 50.0 | 80.0 | 81.5 | 60.0 | 60.0 | 60.0 |
| Value of $(P_1+P_2)-|P_2-P_1|-W*10$ (%) | 1.0 | 0.1 | 2.0 | 2.5 | 3.5 | 1.0 | 2.0 | -0.6 | -0.6 | -2.0 | -1.0 | 0.0 |
| Value (times) of P/W | 16.7 | 12.8 | 60.0 | 15.6 | 100.0 | 16.7 | 16.7 | 20.0 | 21.7 | 8.3 | 100 | 12.5 |
| Value of $(E/W)*100$ (%) | 166.7 | 256.4 | 500.0 | 111.1 | 1000.0 | 166.7 | 166.7 | 166.7 | 166.7 | 100.0 | 120.0 | 150.0 |

13

Table 3-3

| | Example | | | | | | | | | | | |
|---|---|---|---|---|---|---|---|---|---|---|---|---|
| Compositions and properties of inks | | | | | | | | | | | | |
| | 25 | 26 | 27 | 28 | 29 | 30 | 31 | 32 | 33 | 34 | 35 | 36 |
| Type of wax particle | 1 | 1 | 1 | 1 | 1 | 1 | 1 | 1 | 1 | 1 | 1 | 1 |
| Pigment dispersion liquid 1 | 10.00 | 10.00 | 20.00 | 20.00 | 20.00 | 20.00 | 20.00 | 20.00 | 20.00 | 20.00 | 20.00 | 20.00 |
| Pigment dispersion liquid 2 | 40.00 | 40.00 | 30.00 | 30.00 | 30.00 | 30.00 | 30.00 | 30.00 | 30.00 | 30.00 | 30.00 | 30.00 |
| Pigment dispersion liquid 3 | | | | | | | | | | | | |
| Aqueous dispersion liquid of wax particle | 0.20 | 0.10 | 3.00 | 3.00 | 3.00 | 3.00 | 3.00 | 3.00 | 3.00 | 3.00 | 3.00 | 3.00 |
| AQUACER539 | | | | | | | | | | | | |
| Glycerin (20.0) | 10.00 | 10.00 | 10.00 | 10.00 | 10.00 | 10.00 | 10.00 | 10.00 | 10.00 | 10.00 | 10.00 | 19.00 |
| Trimethylolpropane (15.9) | | | | | | | | | | | 9.00 | |
| 1,4-Butanediol (15.0) | | | | | | | | | | 9.00 | | |
| Triethylene glycol (13.6) | 3.00 | 3.00 | | | | | | | 9.00 | | | |
| 1,2-Propanediol (13.5) | | | | | | | | 9.00 | | | | |
| 1,6-Hexanediol (13.5) | 3.00 | 3.00 | | | | | 9.00 | | | | | |
| 2-Pyrrolidone (12.6) | | | | | | 9.00 | | | | | | |
| 1,2-Hexanediol (11.8) | 3.00 | 3.00 | | | 9.00 | | | | | | | |
| Ethylene grycol monoethyl ether (11.5) | | | | 9.00 | | | | | | | | |
| Diethylene glycol monomethyl ether (11.2) | | | 9.00 | | | | | | | | | |
| Surfactant 1 | 0.50 | 0.50 | 0.50 | 0.50 | 0.50 | 0.50 | 0.50 | 0.50 | 0.50 | 0.50 | 0.50 | 0.50 |
| Surfactant 2 | | | | | | | | | | | | |
| Surfactant 3 | | | | | | | | | | | | |
| ACETYLENOL E60 | 0.50 | 0.50 | 0.50 | 0.50 | 0.50 | 0.50 | 0.50 | 0.50 | 0.50 | 0.50 | 0.50 | 0.50 |
| Polyoxyethyiene alkylether | | | | | | | | | | | | |
| Proxel GXL | 0.20 | 0.20 | 0.20 | 0.20 | 0.20 | 0.20 | 0.20 | 0.20 | 0.20 | 0.20 | 0.20 | 0.20 |
| Ion-exchanged water | 29.60 | 29.70 | 26.80 | 26.80 | 26.80 | 26.80 | 26.80 | 26.80 | 26.80 | 26.80 | 26.80 | 26.80 |
| Content of first pigment $P_1$ (%) | 1.00 | 1.00 | 2.00 | 2.00 | 2.00 | 2.00 | 2.00 | 2.00 | 2.00 | 2.00 | 2.00 | 2.00 |

| Compositions and properties of inks | | | | | | | | | | | | |
|---|---|---|---|---|---|---|---|---|---|---|---|---|
| | Example | | | | | | | | | | | |
| | 25 | 26 | 27 | 28 | 29 | 30 | 31 | 32 | 33 | 34 | 35 | 36 |
| Content of second pigment $P_2$ (%) | 4.00 | 4.00 | 3.00 | 3.00 | 3.00 | 3.00 | 3.00 | 3.00 | 3.00 | 3.00 | 3.00 | 3.00 |
| Content of pigment P (%) | 5.00 | 5.00 | 5.00 | 5.00 | 5.00 | 5.00 | 5.00 | 5.00 | 5.00 | 5.00 | 5.00 | 5.00 |
| Content of wax particle W (%) | 0.02 | 0.01 | 0.30 | 0.30 | 0.30 | 0.30 | 0.30 | 0.30 | 0.30 | 0.30 | 0.30 | 0.30 |
| Content of first water-soluble organic solvent S (%) | 9.00 | 9.00 | 0.00 | 9.00 | 9.00 | 9.00 | 9.00 | 9.00 | 9.00 | 9.00 | 0.00 | 0.00 |
| Content of first surfactant E (%) | 0.50 | 0.50 | 0.50 | 0.50 | 0.50 | 0.50 | 0.50 | 0.50 | 0.50 | 0.50 | 0.50 | 0.50 |
| Value of $(P_1/P)*100$ (%) | 200 | 200 | 40.0 | 40.0 | 40.0 | 40.0 | 40.0 | 40.0 | 40.0 | 40.0 | 40.0 | 40.0 |
| Value of $(P_2/P)*100$ (%) | 80.0 | 80.0 | 60.0 | 60.0 | 60.0 | 60.0 | 60.0 | 60.0 | 60.0 | 60.0 | 60.0 | 60.0 |
| Value of $(P_1+P_2)-|P_2-P_1|-W*10$ (%) | 1.8 | 1.9 | 1.0 | 1.0 | 1.0 | 1.0 | 1.0 | 1.0 | 1.0 | 1.0 | 1.0 | 1.0 |
| Value (times) of P/W | 250.0 | 500.0 | 16.7 | 16.7 | 16.7 | 16.7 | 16.7 | 16.7 | 16.7 | 16.7 | 16.7 | 16.7 |
| Value of $(E/W)*100$ (%) | 2500.0 | 5000.0 | 166.7 | 166.7 | 166.7 | 166.7 | 166.7 | 166.7 | 166.7 | 166.7 | 166.7 | 166.7 |

Table 3-4

Compositions and properties of inks

| | Example | | | | | | | | | | |
|---|---|---|---|---|---|---|---|---|---|---|---|
| | 37 | 38 | 39 | 40 | 41 | 42 | 43 | 44 | 45 | 46 | 47 |
| Type of wax particle | 1 | 1 | 1 | 1 | 1 | 1 | | 1 | 1 | 14 | 14 |
| Pigment dispersion liquid 1 | 20.00 | 20.00 | 20.00 | 20.00 | 20.00 | 20.00 | 20.00 | 15.00 | 35.00 | 12.00 | 25.00 |
| Pigment dispersion liquid 2 | 30.00 | 30.00 | 30.00 | 30.00 | 30.00 | 30.00 | 30.00 | 45.00 | 35.00 | 53.00 | 20.00 |
| Pigment dispersion liquid 3 | | | | | | | | | | | |
| Aqueous dispersion liquid of wax particle | 3.00 | 3.00 | 3.00 | 3.00 | 3.30 | 3.00 | 3.00 | 3.00 | 5.00 | 0.30 | 0.50 |
| AQUACER539 | | | | | | | | | | | |
| Glycerin (20.0) | 10.00 | 10.00 | 10.00 | 10.00 | 10.00 | 10.00 | 10.00 | 10.00 | 10.00 | 10.00 | 10.00 |
| Trimethylolpropane (15.9) | | | | | | | | | | | |
| 1,4-Butanediol (15.0) | 1.00 | 1.00 | 3.00 | 5.00 | | | | | | | |
| Triethylene glycol (13.6) | 1.00 | 1.00 | 4.00 | 5.00 | 3.00 | 3.00 | 3.00 | 3.00 | 3.00 | | |
| 1,2-Propanediol (13.5) | | | | | | | | | | | |
| 1,6-Hexanediol (13.5) | 1.00 | 2.00 | 4.00 | 5.00 | 3.00 | 3.00 | 3.00 | 3.00 | 3.00 | | |
| 2-Pyrrolidone (12.6) | | | | | | | | | | | |
| 1,2-Hexanediol (11.8) | 1.00 | 1.00 | 4.00 | 5.00 | 3.00 | 3.00 | 3.00 | 3.00 | 3.00 | | |
| Ethylene grycol monoethyl ether (11.5) | | | | | | | | | | | |
| Diethylene glycol monomethyl ether (11.2) | | | | | | | | | | | |
| Surfactant 1 | 0.50 | 0.50 | 0.50 | 0.50 | | | | 0.20 | 0.50 | | |
| Surfactant 2 | | | | | | | 0.50 | | | | |
| Surfactant 3 | | | | | | 0.50 | | | | | |
| ACETYLENOL E60 | 0.50 | 0.50 | 0.50 | 0.50 | 0.50 | 0.50 | 0.50 | 0.50 | 0.50 | 0.50 | 0.50 |
| Polyoxyethyiene alkylether | | | | | | | | | | | |
| Proxel GXL | 0.20 | 0.20 | 0.20 | 0.20 | 0.20 | 0.20 | 0.20 | 0.20 | 0.20 | 0.20 | 0.20 |
| Ion-exchanged water | 31.80 | 30.80 | 20.80 | 15.80 | 27.00 | 26.80 | 26.80 | 17.10 | 4.80 | 24.00 | 43.80 |
| Content of first pigment $P_1$ (%) | 2.00 | 2.00 | 2.00 | 2.00 | 2.00 | 2.00 | 2.00 | 1.50 | 3.50 | 1.20 | 2.50 |

(continued)

| Compositions and properties of inks | | | | | | | | | | | |
|---|---|---|---|---|---|---|---|---|---|---|---|
| | Example | | | | | | | | | | |
| | 37 | 38 | 39 | 40 | 41 | 42 | 43 | 44 | 45 | 46 | 47 |
| Content of second pigment $P_2$ (%) | 3.00 | 3.00 | 3.00 | 3.00 | 3.00 | 3.00 | 3.00 | 4.50 | 3.50 | 5.30 | 2.00 |
| Content of pigment P (%) | 5.00 | 5.00 | 5.00 | 5.00 | 5.00 | 5.00 | 5.00 | 6.00 | 7.00 | 6.50 | 4.50 |
| Content of wax particle W (%) | 0.30 | 0.30 | 0.30 | 0.30 | 0.33 | 0.30 | 0.30 | 0.30 | 0.50 | 0.03 | 0.05 |
| Content of first water-soluble organic solvent S (%) | 4.00 | 5.00 | 15.00 | 20.00 | 9.00 | 9.00 | 9.00 | 9.00 | 9.00 | 0.00 | 0.00 |
| Content of first surfactant E (%) | 0.50 | 0.50 | 0.50 | 0.50 | 0.00 | 0.00 | 0.50 | 0.20 | 0.50 | 0.00 | 0.00 |
| Value of $(P_1/P)*100$ (%) | 40.0 | 40.0 | 40.0 | 40.0 | 40.0 | 40.0 | 40.0 | 25.0 | 50.0 | 18.5 | 55.6 |
| Value of $(P_2/P)*100$ (%) | 60.0 | 60.0 | 60.0 | 60.0 | 60.0 | 60.0 | 60.0 | 75.0 | 50.0 | 81.5 | 44.4 |
| Value of $(P_1+P_2)-|P_2-P_1|-W*10$ (%) | 1.0 | 1.0 | 1.0 | 1.0 | 0.7 | 1.0 | 1.0 | 0.0 | 2.0 | 2.1 | 3.5 |
| Value (times) of P/W | 16.7 | 16.7 | 16.7 | 16.7 | 15.2 | 16.7 | 16.7 | 20.0 | 14.0 | 216.7 | 90.0 |
| Value of $(E/W)*100$ (%) | 166.7 | 166.7 | 166.7 | 166.7 | 0.0 | 0.0 | 166.7 | 66.7 | 100.0 | 0.0 | 0.0 |

Table 3-5

Compositions and properties of inks

| | Comparative Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Type of wax particle | 1 | - | 1 | - | 1 | - | 1 | - | - | - | - | - |
| Pigment dispersion liquid 1 | 50.00 | | | | 50.00 | 50.00 | 20.00 | 20.00 | 20.00 | 20.00 | 15.00 | |
| Pigment dispersion liquid 2 | | 50.00 | 30.00 | 30.00 | | | | | 30.00 | | 45.00 | 40.00 |
| Pigment dispersion liquid 3 | | | 20.00 | 20.00 | | | 30.00 | 30.00 | | 20.00 | | |
| Aqueous dispersion liquid of wax particle | 1.00 | | 1.00 | | 1.00 | | | | | | | |
| AQUACER539 | | | | | | | 1.00 | | | | | 1.43 |
| Glycerin (20.0) | 10.00 | 10.00 | 10.00 | 10.00 | 10.00 | 10.00 | 10.00 | 10.00 | 10.00 | 10.00 | 10.00 | |
| Trimethylolpropane (15.9) | | | | | | | | | | | | |
| 1,4-Butanediol (15.0) | | | | | | | | | | | | |
| Triethylene glycol (13.6) | 3.00 | 3.00 | 3.00 | 3.00 | 3.00 | 3.00 | 3.00 | 3.00 | 3.00 | 5.00 | 5.00 | |
| 1,2-Propanediol (13.5) | | | | | | | | | | | | 2.00 |
| 1,6-Hexanediol (13.5) | 3.00 | 3.00 | 3.00 | 3.00 | 3.00 | 3.00 | 3.00 | 3.00 | 3.00 | | | |
| 2-Pyrrolidone (12.6) | | | | | | | | | | | | 19.00 |
| 1,2-Hexanediol (11.8) | 3.00 | 3.00 | 3.00 | 3.00 | 3.00 | 3.00 | 3.00 | 3.00 | 3.00 | 5.00 | 5.00 | 3.50 |
| Ethylene glycol monoethyl ether (11.5) | | | | | | | | | | | | |
| Diethylene glycol monomethyl ether (11.2) | | | | | | | | | | | | |
| Surfactant 1 | 0.50 | 0.50 | 0.50 | 0.50 | 0.50 | 0.50 | 0.50 | 0.50 | 0.50 | | | |
| Surfactant 2 | | | | | | | | | | | | |
| Surfactant 3 | | | | | | | | | | | | |
| ACETYLENOL E60 | 0.50 | 0.50 | 0.50 | 0.50 | 0.50 | 0.50 | 0.50 | 0.50 | 0.50 | | | |
| Polyoxyethylene alkylether | | | | | | | | | | 0.30 | 0.30 | |
| Proxel GXL | 0.20 | 0.20 | 0.20 | 0.20 | 0.20 | 0.20 | 0.20 | 0.20 | 0.20 | | | |
| Ion-exchanged water | 28.80 | 29.80 | 28.80 | 29.80 | 28.80 | 29.80 | 28.80 | 29.80 | 29.80 | 39.70 | 19.70 | 34.07 |
| Content of first pigment $P_1$ (%) | 0.00 | 0.00 | 0.00 | 0.00 | 5.00 | 5.00 | 2.00 | 2.00 | 2.00 | 2.00 | 1.50 | 0.00 |

(continued)

| Compositions and properties of inks | | | | | | | | | | | | |
|---|---|---|---|---|---|---|---|---|---|---|---|---|
| | Comparative Example | | | | | | | | | | | |
| | 1 | 2 | 3 | 4 | 5 | 6 | 7 | 8 | 9 | 10 | 11 | 12 |
| Content of second pigment $P_2$ (%) | 5.00 | 5.00 | 3.00 | 3.00 | 0.00 | 0.00 | 0.00 | 0.00 | 3.00 | 0.00 | 4.50 | 4.00 |
| Content of pigment P (%) | 5.00 | 5.00 | 5.00 | 5.00 | 5.00 | 5.00 | 5.00 | 5.00 | 5.00 | 4.00 | 6.00 | 4.00 |
| Content of wax particle W (%) | 0.10 | 0.00 | 0.10 | 0.00 | 0.10 | 0.00 | 0.10 | 0.00 | 0.00 | 0.00 | 0.00 | 0.50 |
| Content of first water-soluble organic solvent S (%) | 9.00 | 9.00 | 9.00 | 9.00 | 9.00 | 9.00 | 9.00 | 9.00 | 9.00 | 10.00 | 10.00 | 24.50 |
| Content of first surfactant E (%) | 0.50 | 0.50 | 0.50 | 0.50 | 0.50 | 0.50 | 0.50 | 0.50 | 0.50 | 0.00 | 0.00 | 0.00 |
| Value of $(P_1/P)*100$ (%) | 0.0 | 0.0 | 0.0 | 0.0 | 100.0 | 100.0 | 40.0 | 40.0 | 40.0 | 50.0 | 25.0 | 0.0 |
| Value of $(P_2/P)*100$ (%) | 100.0 | 100.0 | 60.0 | 60.0 | 0.0 | 0.0 | 0.0 | 0.0 | 60.0 | 0.0 | 75.0 | 100.0 |
| Value of $(P_1+P_2)-\lvert P_2-P_1\rvert-W*10$ (%) | -1.0 | 0.0 | -1.0 | 0.0 | -1.0 | 0.0 | -1.0 | 0.0 | 4.0 | 0.0 | 3.0 | -5.0 |
| Value (times) of P/W | 50.0 | - | 50.0 | - | 50.0 | - | 50.0 | - | - | - | - | 8.0 |
| Value of $(E/W)*100$ (%) | 500.0 | - | 500.0 | - | 500.0 | - | 500.0 | - | - | - | - | 0.0 |

<Evaluation>

Each of the inks obtained above was filled into an ink cartridge, and the ink cartridge was set in an ink jet recording apparatus (product name: "PIXUS PRO-10S" (manufactured by Canon Inc.)) having mounted thereon a recording head that ejects an ink by heat energy. In Examples of the present embodiment, an image recorded under such a condition that 8 droplets (about 30 ng) of an ink having a mass of 3.8 ng per droplet was applied to a unit region measuring 1/600 inch by 1/600 inch was defined as having a recording duty of 100%. In the present invention, in the evaluation criteria of each of the following evaluation items, while ranks "A" and "B" were defined as acceptable levels, a rank "C" was defined as an unacceptable level. The evaluation results are shown in Table 4.

(Color Developability)

With use of the ink jet recording apparatus described above, a solid image having a recording duty of 100% was recorded on a recording medium (product name: "Canon Photo Paper Glossy Gold GL-101," manufactured by Canon Inc.). The recorded image was dried at 25°C for 24 hours. After that, the optical density of the solid image was measured with a fluorescent spectrodensitometer (product name: "FD-7", manufactured by Konica Minolta, Inc.), and the color developability of the image was evaluated in accordance with the following evaluation criteria. The measurement conditions were a light source of D50 and a field of view of 2°.

A: The optical density was 1.65 or more.
B: The optical density was 1.60 or more to less than 1.65.
C: The optical density was less than 1.60.

(Light Fastness)

With use of the ink jet recording apparatus described above, 15 kinds of solid images having recording duties changed by 10% intervals within the range of from 0% to 140% were recorded on recording media (product name: "Canon Photo Paper Glossy Gold GL-101," manufactured by Canon Inc.). The recorded images were dried at 25°C for 24 hours. After that, spectral sensitivity characteristics of the images having respective recording duties were measured with a fluorescent spectrodensitometer (product name: "FD-7", manufactured by Konica Minolta, Inc.), and an image having a spectral density closest to 1.0 was specified. The spectral sensitivity characteristics described above are each the spectral density of the yellow component as defined by "ISO Status A." A recording medium (recorded material) having the specified image recorded thereon was placed in a super xenon tester (product name: "SX-75", manufactured by Suga Test Instruments Co., Ltd.), and was irradiated with xenon light for 600 hours under conditions with a vessel internal temperature of 24°C, a relative humidity of 60% and an irradiation intensity of 100 kilolux. The optical density of the image after the irradiation was measured, and the "optical density residual ratio (%)" was calculated based on the formula (4) described below, and the light fastness of the image was evaluated in accordance with the following evaluation criteria.

$$\text{Optical Density Residual Ratio (\%)}$$
$$= \{(\text{Optical Density After Irradiation})/(\text{Optical Density Before Irradiation})\} \times 100 \quad \cdots(4)$$

A: The optical density residual ratio was 85% or more.
B: The optical density residual ratio was 70% or more to less than 85%.
C: The optical density residual ratio was less than 70%.

(Sticking Recovery Property)

A printer driver for the ink jet recording apparatus described above was operated to perform a recovery operation (cleaning). Then, a power cable was disconnected during operation of a carriage so as to bring the recording head into an uncapped state. While this state is maintained, the ink jet recording apparatus was left for 14 days under the environment with a temperature of 30°C and a relative humidity of 10%. After that, the recovery operation (cleaning) for the ink jet recording apparatus was performed again, and a nozzle check pattern of "PIXUS PRO-10S" was recorded. The recorded nozzle pattern was visually observed, and the sticking recovery property was evaluated in accordance with the following evaluation criteria.

A: After 1 to 3 times of the recovery, the ink jet recording apparatus was brought into a state of being capable of performing normal recording.

B: After 4 to 10 times of the recovery processing, the ink jet recording apparatus was brought into a state of being capable of performing normal recording.

C: Even after 11 times of the recovery processing, the ink jet recording apparatus was not brought into a state of being capable of performing normal recording.

Table 4

| Evaluation result | | | | |
|---|---|---|---|---|
| | | Color developability | Light fastness | Sticking recovery property |
| Example | 1 | A | A | A |
| | 2 | A | A | B |
| | 3 | A | A | B |
| | 4 | A | A | B |
| | 5 | A | A | B |
| | 6 | A | A | B |
| | 7 | A | A | B |
| | 8 | A | A | A |
| | 9 | A | A | A |
| | 10 | A | A | B |
| | 11 | A | A | A |
| | 12 | A | A | A |
| | 13 | A | A | B |
| | 14 | A | A | A |
| | 15 | A | A | A |
| | 16 | A | A | B |
| | 17 | A | A | B |
| | 18 | A | B | A |
| | 19 | A | A | A |
| | 20 | A | A | A |
| | 21 | B | A | A |
| | 22 | A | A | B |
| | 23 | A | A | B |
| | 24 | A | A | A |
| | 25 | A | A | A |
| | 26 | A | A | B |
| | 27 | A | A | B |
| | 28 | A | A | A |
| | 29 | A | A | A |
| | 30 | A | A | A |

(continued)

| | | Color developability | Light fastness | Sticking recovery property |
|---|---|---|---|---|
| Example | 31 | A | A | A |
| | 32 | A | A | A |
| | 33 | A | A | A |
| | 34 | A | A | A |
| | 35 | A | A | B |
| | 36 | A | A | B |
| | 37 | A | A | B |
| | 38 | A | A | A |
| | 39 | A | A | A |
| | 40 | B | A | A |
| | 41 | A | A | B |
| | 42 | A | A | B |
| | 43 | A | A | A |
| | 44 | A | A | B |
| | 45 | A | A | A |
| | 46 | B | A | B |
| | 47 | A | B | B |
| Comparative Example | 1 | C | A | A |
| | 2 | C | A | A |
| | 3 | C | A | B |
| | 4 | C | A | B |
| | 5 | A | C | A |
| | 6 | A | C | A |
| | 7 | A | C | B |
| | 8 | A | C | B |
| | 9 | A | A | C |
| | 10 | C | B | A |
| | 11 | A | A | C |
| | 12 | C | A | A |

The sticking recovery property of each of Examples 22 and 23 was in the B rank, but Example 23 had more satisfactory sticking recovery performance as compared to Example 22.

According to the present invention, the aqueous ink for ink jet that is capable of recording an image excellent in color developability and light fastness and is excellent in sticking recovery property can be provided. Further, according to the present invention, the ink cartridge and the ink jet recording method each using the aqueous ink can be provided.

**Claims**

1.  An aqueous ink for ink jet comprising a plurality of kinds of pigments and a wax particle,

    wherein the plurality of kinds of pigments comprise a first pigment and a second pigment,
    wherein the first pigment is C.I. Pigment Yellow 74 and the second pigment is C.I. Pigment Yellow 155.

2. The aqueous ink according to claim 1, wherein a material forming the wax particle comprises an oxidized-polyethylene wax.

3. The aqueous ink according to claim 1 or 2, wherein the wax particle has an acid value of 20 mgKOH/g or less.

4. The aqueous ink according to any one of claims 1 to 3, wherein a cumulative 50% particle diameter of the wax particle on a volume basis is 140 nm or less.

5. The aqueous ink according to any one of claims 1 to 4, wherein a content $P_1$ (% by mass) of the first pigment, a content $P_2$ (% by mass) of the second pigment, and a content W (% by mass) of the wax particle satisfy a relationship of the following formula (1).

$$(P_1+P_2)-|P_2-P_1|-W\times 10\leq 2.0 \cdot\cdot\cdot (1)$$

6. The aqueous ink according to any one of claims 1 to 5, wherein a content $P_1$ (% by mass) of the first pigment in the aqueous ink is 0.10 % by mass or more to 10.00 % by mass or less with respect to the total mass of the aqueous ink.

7. The aqueous ink according to any one of claims 1 to 6, wherein a content $P_2$ (% by mass) of the second pigment in the aqueous ink is 0.10 % by mass or more to 10.00 % by mass or less with respect to the total mass of the aqueous ink.

8. The aqueous ink according to any one of claims 1 to 7, wherein a ratio of a total content (% by mass) of the first pigment and the second pigment to the total content (% by mass) of the plurality of kinds of pigments in the aqueous ink is 95.0 % by mass or more.

9. The aqueous ink according to any one of claims 1 to 8, wherein a content $P_2$ (% by mass) of the second pigment in a total content P (% by mass) of the plurality of kinds of pigments is 50.00 % by mass or more to 80.00 % by mass or less.

10. The aqueous ink according to any one of claims 1 to 9, wherein a content of the wax particle in the aqueous ink is 0.01 % by mass or more to 3.00 % by mass or less with respect to the total mass of the ink.

11. The aqueous ink according to any one of claims 1 to 10, wherein a mass ratio of a total content P (% by mass) of the plurality of kinds of pigments to a content W (% by mass) of the wax particle is preferably 10.0 times or more to 250.0 times or less.

12. The aqueous ink according to claim 11, wherein the mass ratio of the total content P (% by mass) of the plurality of kinds of pigments to the content W (% by mass) of the wax particle is 12.5 times or more to 100.0 times or less.

13. The aqueous ink according to any one of claims 1 to 12, further comprising a first water-soluble organic solvent having an SP value of 11.5 $(cal/cm^3)^{1/2}$ or more to 15.0 $(cal/cm^3)^{1/2}$ or less as determined by the Fedors method.

14. The aqueous ink according to claim 13, wherein a content (% by mass) of the first water-soluble organic solvent in the ink with respect to the total mass of the ink is 5.00 % by mass or more to 15.00 % by mass or less.

15. The aqueous ink according to any one of claims 1 to 14, wherein the aqueous ink further comprises a surfactant represented by the following formula (2) that is a block copolymer in which a ratio of a propylene oxide block is 80 % by mass or more,

$$HO-(CH_2CH_2O)_a-(CH_2CH_2(CH_3)O)_b-(CH_2CH_2O)_c-H \cdots \qquad (2)$$

wherein, in the formula (2), $a\geq 1.0$, $b\geq 1.0$ and $c\geq 1.0$ are satisfied.

16. The aqueous ink according to claim 15, wherein a content W (% by mass) of the wax particle and a content E (% by mass) of the surfactant in the ink satisfy a relationship of the following formula (3).

$$(E/W)\times 100\geq 100.0 \cdots (3)$$

17. An ink cartridge comprises an ink and an ink storage portion configured to store the ink,

wherein the ink comprises the aqueous ink according to any one of claims 1 to 16.

18. An ink jet recording method wherein an image is recorded on a recording medium by ejecting an ink from a recording head,
wherein the ink comprises an aqueous ink according to any one of claims 1 to 16.

19. The ink jet recording method according to claim 18, wherein the recording head employs a system for ejecting aqueous ink by applying thermal energy.

**Patentansprüche**

1. Wässrige Tinte zum Tintenstrahlen, umfassend mehrere Arten von Pigmenten und ein Wachspartikel,

   wobei die mehreren Arten von Pigmenten ein erstes Pigment und ein zweites Pigment umfassen,
   wobei das erste Pigment C.I. Pigment Yellow 74 ist und das zweite Pigment C.I. Pigment Yellow 155 ist.

2. Wässrige Tinte nach Anspruch 1, wobei ein Material, das das Wachspartikel bildet, ein oxidiertes Polyethylenwachs umfasst.

3. Wässrige Tinte nach Anspruch 1 oder 2, wobei das Wachspartikel eine Säurezahl von 20 mgKOH/g oder weniger aufweist.

4. Wässrige Tinte nach einem der Ansprüche 1 bis 3, wobei ein kumulativer 50%-Partikeldurchmesser des Wachspartikels auf Volumenbasis 140 nm oder weniger beträgt.

5. Wässrige Tinte nach einem der Ansprüche 1 bis 4, wobei ein Gehalt $P_1$ (Massen-%) des ersten Pigments, ein Gehalt $P_2$ (Massen-%) des zweiten Pigments und ein Gehalt W (Massen-%) des Wachspartikels eine Beziehung der folgenden Formel (1) erfüllen.

$$(P_1+P_2)-|P_2-P_1|-W \times 10 \leq 2{,}0 \quad \cdot \cdot \cdot (1)$$

6. Wässrige Tinte nach einem der Ansprüche 1 bis 5, wobei ein Gehalt $P_1$ (Massen-%) des ersten Pigments in der wässrigen Tinte 0,10 Massen-% oder mehr bis 10,00 Massen-% oder weniger in Bezug auf die Gesamtmasse der wässrigen Tinte beträgt.

7. Wässrige Tinte nach einem der Ansprüche 1 bis 6, wobei ein Gehalt $P_2$ (Massen-%) des zweiten Pigments in der wässrigen Tinte 0,10 Massen-% oder mehr bis 10,00 Massen-% oder weniger in Bezug auf die Gesamtmasse der wässrigen Tinte beträgt.

8. Wässrige Tinte nach einem der Ansprüche 1 bis 7, wobei ein Verhältnis eines Gesamtgehalts (Massen-%) des ersten Pigments und des zweiten Pigments zu dem Gesamtgehalt (Massen-%) der mehreren Arten von Pigmenten in der wässrigen Tinte 95,0 Massen-% oder mehr beträgt.

9. Wässrige Tinte nach einem der Ansprüche 1 bis 8, wobei ein Gehalt $P_2$ (Massen-%) des zweiten Pigments in einem Gesamtgehalt P (Massen-%) der mehreren Arten von Pigmenten 50,00 Massen-% oder mehr bis 80,00 Massen-% oder weniger beträgt.

10. Wässrige Tinte nach einem der Ansprüche 1 bis 9, wobei ein Gehalt des Wachspartikels in der wässrigen Tinte 0,01 Massen-% oder mehr bis 3,00 Massen-% oder weniger in Bezug auf die Gesamtmasse der Tinte beträgt.

11. Wässrige Tinte nach einem der Ansprüche 1 bis 10, wobei ein Massenverhältnis eines Gesamtgehalts P (Massen-%) der mehreren Arten von Pigmenten zu einem Gehalt W (Massen-%) des Wachspartikels vorzugsweise das 10,0-fache oder mehr bis 250,0-fache oder weniger beträgt.

12. Wässrige Tinte nach Anspruch 11, wobei das Massenverhältnis des Gesamtgehalts P (Massen-%) der mehreren Arten von Pigmenten zu dem Gehalt W (Massen-%) des Wachspartikels das 12,5-fache oder mehr bis 100,0-fache oder weniger beträgt.

13. Wässrige Tinte nach einem der Ansprüche 1 bis 12, ferner umfassend ein erstes wasserlösliches organisches Lösungsmittel mit einem SP-Wert von 11,5 $(cal/cm^3)^{1/2}$ oder mehr bis 15,0 $(cal/cm^3)^{1/2}$ oder weniger, wie durch das Fedors-Verfahren bestimmt.

14. Wässrige Tinte nach Anspruch 13, wobei ein Gehalt (Massen-%) des ersten wasserlöslichen organischen Lösungsmittels in der Tinte in Bezug auf die Gesamtmasse der Tinte 5,00 Massen-% oder mehr bis 15,00 Massen-% oder weniger beträgt.

15. Wässrige Tinte nach einem der Ansprüche 1 bis 14, wobei die wässrige Tinte ferner ein oberflächenaktives Mittel umfasst, das durch die folgende Formel (2) dargestellt ist, die ein Blockcopolymer ist, in dem ein Anteil eines Propylenoxidblocks 80 Massen-% oder mehr beträgt,

$$HO\text{-}(CH_2CH_2O)_a\text{-}(CH_2CH_2(CH_3)O)_b\text{-}(CH_2CH_2O)_c\text{-}H \cdots \qquad (2)$$

wobei in der Formel (2) a≥1,0, b≥1,0 und c≥1,0 erfüllt sind.

16. Wässrige Tinte nach Anspruch 15, wobei ein Gehalt W (Massen-%) des Wachspartikels und ein Gehalt E (Massen-%) des oberflächenaktiven Mittels in der Tinte eine Beziehung der folgenden Formel (3) erfüllen.

$$(E/W)\times100\geq100,0 \cdots(3)$$

17. Tintenkartusche, umfassend eine Tinte und einen Tintenaufnahmeabschnitt, der konfiguriert ist, die Tinte aufzunehmen,
wobei die Tinte die wässrige Tinte nach einem der Ansprüche 1 bis 16 umfasst.

18. Tintenstrahlaufzeichnungsverfahren, wobei ein Bild auf einem Aufzeichnungsmedium durch Ausstoßen einer Tinte aus einem Aufzeichnungskopf aufgezeichnet wird,
wobei die Tinte eine wässrige Tinte nach einem der Ansprüche 1 bis 16 umfasst.

19. Tintenstrahlaufzeichnungsverfahren nach Anspruch 18, wobei der Aufzeichnungskopf ein System zum Ausstoßen von wässriger Tinte durch Anwenden von Wärmeenergie einsetzt.

**Revendications**

1. Encre aqueuse pour jet d'encre comprenant une pluralité de types de pigments et une particule de cire,

dans laquelle la pluralité de types de pigments comprennent un premier pigment et un deuxième pigment,
dans laquelle le premier pigment est le pigment jaune C.I. 74 et le deuxième pigment est le pigment jaune C.I. 155.

2. Encre aqueuse selon la revendication 1, dans laquelle un matériau formant la particule de cire comprend une cire de polyéthylène oxydée.

3. Encre aqueuse selon la revendication 1 ou 2, dans laquelle la particule de cire a une valeur acide de 20 mgKOH/g ou moins.

4. Encre aqueuse selon l'une quelconque des revendications 1 à 3, dans laquelle un diamètre de particule cumulé de 50 % de la particule de cire sur une base volumique est de 140 nm ou moins.

5. Encre aqueuse selon l'une quelconque des revendications 1 à 4, dans laquelle une teneur $P_1$ (% en masse) du premier pigment, une teneur $P_2$ (% en masse) du deuxième pigment, et une teneur W (% en masse) de la particule de cire satisfont à une relation de la formule (1) suivante.

$$(P_1+P_2)-|P_2-P_1|-W\times10\leq2,0 \cdots(1)$$

**6.** Encre aqueuse selon l'une quelconque des revendications 1 à 5, dans laquelle une teneur $P_1$ (% en masse) du premier pigment dans l'encre aqueuse est de 0,10 % en masse ou plus à 10,00 % en masse ou moins par rapport à la masse totale de l'encre aqueuse.

**7.** Encre aqueuse selon l'une quelconque des revendications 1 à 6, dans laquelle une teneur $P_2$ (% en masse) du deuxième pigment dans l'encre aqueuse est de 0,10 % en masse ou plus à 10,00 % en masse ou moins par rapport à la masse totale de l'encre aqueuse.

**8.** Encre aqueuse selon l'une quelconque des revendications 1 à 7, dans laquelle un rapport d'une teneur totale (% en masse) du premier pigment et du deuxième pigment sur la teneur totale (% en masse) de la pluralité de types de pigments dans l'encre aqueuse est de 95,0 % en masse ou plus.

**9.** Encre aqueuse selon l'une quelconque des revendications 1 à 8, dans laquelle une teneur $P_2$ (% en masse) du deuxième pigment dans une teneur totale P (% en masse) de la pluralité de types de pigments est de 50,00 % en masse ou plus à 80,00 % en masse ou moins.

**10.** Encre aqueuse selon l'une quelconque des revendications 1 à 9, dans laquelle une teneur de la particule de cire dans l'encre aqueuse est de 0,01 % en masse ou plus à 3,00 % en masse ou moins par rapport à la masse totale de l'encre.

**11.** Encre aqueuse selon l'une quelconque des revendications 1 à 10, dans laquelle un rapport massique d'une teneur totale P (% en masse) de la pluralité de types de pigments sur une teneur W (% en masse) de la particule de cire est de préférence de 10,0 fois ou plus à 250,0 fois ou moins.

**12.** Encre aqueuse selon la revendication 11, dans laquelle le rapport massique de la teneur totale P (% en masse) de la pluralité de types de pigments sur la teneur W (% en masse) de la particule de cire est de 12,5 fois ou plus à 100,0 fois ou moins.

**13.** Encre aqueuse selon l'une quelconque des revendications 1 à 12, comprenant en outre un premier solvant organique soluble dans l'eau ayant une valeur SP de 11,5 $(cal/cm^3)^{1/2}$ ou plus à 15,0 $(cal/cm^3)^{1/2}$ ou moins tel que déterminé par le procédé de Fedors.

**14.** Encre aqueuse selon la revendication 13, dans laquelle une teneur (% en masse) du premier solvant organique soluble dans l'eau dans l'encre par rapport à la masse totale de l'encre est de 5,00 % en masse ou plus à 15,00 % en masse ou moins.

**15.** Encre aqueuse selon l'une quelconque des revendications 1 à 14, dans laquelle l'encre aqueuse comprend en outre un tensioactif représenté par la formule (2) suivante qui est un copolymère à blocs dans lequel un rapport d'un bloc d'oxyde de propylène est de 80 % en masse ou plus,

$$HO\text{-}(CH_2CH_2O)_a\text{-}(CH_2CH_2(CH_3)O)_b\text{-}(CH_2CH_2O)_c\text{-}H \ldots \qquad (2)$$

dans laquelle, dans la formule (2), $a \geq 1,0$, $b \geq 1,0$ et $c \geq 1,0$ sont satisfaits.

**16.** Encre aqueuse selon la revendication 15, dans laquelle une teneur W (% en masse) de la particule de cire et une teneur E (% en masse) du tensioactif dans l'encre satisfont à une relation de la formule (3) suivante.

$$(E/W) \times 100 \geq 100,0 \ \ldots (3)$$

**17.** Cartouche d'encre comprenant une encre et une portion de stockage d'encre configurée pour stocker l'encre, dans laquelle l'encre comprend l'encre aqueuse selon l'une quelconque des revendications 1 à 16.

**18.** Procédé d'enregistrement à jet d'encre dans lequel une image est enregistrée sur un support d'enregistrement par éjection d'une encre d'une tête d'enregistrement,
dans lequel l'encre comprend une encre aqueuse selon l'une quelconque des revendications 1 à 16.

**19.** Procédé d'enregistrement à jet d'encre selon la revendication 18, dans lequel la tête d'enregistrement emploie un système pour éjecter de l'encre aqueuse par application d'énergie thermique.

FIG. 1

# FIG. 2A

# FIG. 2B

**EP 4 417 658 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012072359 A

- JP 2020019875 A